# EUROPEAN PATENT APPLICATION

(11) **EP 2 290 777 A1**
(43) Date of publication of application: **02.03.2011**
(21) Application number: 09169187.3
(22) Date of filing: 01.09.2009
(51) Int. Cl.: H02H 9/04, H05B 33/08, H02H 7/125

(54) **Mains surge protection**

(71) Applicant: NXP B.V., 5656 AG Eindhoven (NL)
(72) Inventor: Schmid, Markus, Redhill, Surrey RH1 1DL (GB); Langeslag, Wilhelmus Hinderikus Maria, Redhill, Surrey RH1 1DL (GB); Halberstadt, Hans, Redhill, Surrey RH1 1DL (GB); Pansier, Frans, Redhill, Surrey RH1 1DL (GB); Hoogzaad, Gian, Redhill, Surrey RH1 1DL (GB); Duerbaum, Thomas Antonius, Redhill, Surrey RH1 1DL (GB); Kuebrich, Johann Baptist Daniel, Redhill, Surrey RH1 1DL (GB)
(74) Representative: Hardingham, Christopher Mark

(57) **Abstract**

A mains driven power supply unit for powering a load (18) comprises a power stage (14,16) for converting the ac mains input voltage to the power level required by the load (18). A surge protection stage (10) comprises at least one series impedance element (Zₛₑᵣ) that limits the currents in case of a surge event to a current level below 100 amps. This arrangement avoids the need for large capacitors by providing a high impedance series element.

## Description

This invention relates to surge protection circuits, in particular for circuits which are connected to the mains, and used within a power supply unit for an electronic device.

Surge impulses in the form of transient overvoltages and overcurrents can occur as a consequence of lightning (directly or induced) or of switching actions in the power supply system. The surge impulse is standardized according the IEC 61000-4.5 and the IEEE C61.41.2 standards which define a 1.2µs/50µs voltage wave across an open circuit and an 8µs/20µs current wave into a short circuit, with different severity levels with respect to the application. Thus, a mains-driven power supply unit requires a protection circuit to protect the components from overvoltage and overcurrent in order to comply with the standards.

In the case of medium and high power ratings, mains driven power supply units are in general equipped with a large capacitor as an energy storage element in order to supply the load (e.g. a switched mode power supply and a load) during the time when the mains input voltage is low to guarantee a more or less constant output power.

Since such a large energy storage element is generally able to absorb a large part of the energy of a surge impulse, the protection against overvoltages and overcurrents is less severe and an adequate varistor in parallel to the capacitor with some parasitic series impedance in-between is often sufficient. The parasitic series impedance is supplied by filter components (common and differential mode chokes) and the inrush current limiting element - typically a negative temperature coefficient thermistor - with small inductive and especially resistive contributions. Power supplies using these standard surge protection means still exhibit huge current levels in the case of surge events. The current in the varistor can still reach several 100s of amps and even the components between the varistor and the large capacitor are stressed by current levels in excess of 100 amps.

However, in the case of applications with lower power ratings, an energy storage element is either not required and/or not desired because of the size of the capacitor (typically an electrolytic capacitor), so that often only a small capacitance is available which is not able to buffer occurring energy pulses sufficiently. Thus, using a single varistor as surge protection element is usually not enough. A capacitance in combination with only a single varistor needs typically a capacitance value of 100µF or more to keep the voltage within an acceptable range. Such a huge capacitance would increase the cost and size of the design.

Thus, the standard surge protection means will result in components which are high in cost and volume. While not being such a big issue for high power supplies (greater than 100 W) the high cost really results in a huge disadvantage for power supplies for medium to low power.

This invention aims to provide a protection circuit for high-energy surge impulses for applications with low to medium power ranges and which can be implemented with low cost.

According to the invention, there is provided a mains driven power supply unit for powering a load, comprising:
a power stage for converting the ac mains input voltage to the power level required by the load; and
a surge protection stage comprising at least one series impedance element that limits the currents in case of a surge event to a current below 100 amps.

This arrangement avoids the need for large capacitors by providing a current limiting series element - for example a high impedance element. Thus, it is possible to limit the capacitance value to the amount dictated by the application instead of a value dictated by the surge requirements. Especially, it is possible to use very small, preferably non-electrolytic capacitances (smaller than 10µF, preferably smaller than 1µF) in case of ac-dc power supplies that do not need 50Hz energy storage.

The series impedance element has a high enough impedance so that it functions as a surge protection element by limiting the current.

In preferred embodiments there is an additional impedance in parallel to the power supply input. This impedance preferably has a very high value under normal operation (50Hz impedance). In one embodiment, such a parallel impedance is formed by a varistor whose impedance is very high under normal operation but drops to a very small (differential) resistance once a critical voltage has been exceeded. In another embodiment, a capacitance can be used as parallel impedance whose value can be very small due to the fact that the surge current limiting series element allows the capacitance value to be restricted to that dictated by the application. Preferably, this capacitor is then chosen smaller than 10µF (preferably less than 1µF) and thus the use of electrolytic capacitors can be avoided, which helps to increase the lifetime of the product.

In one example, a resistor is used as the series impedance element and a varistor is used as the parallel impedance element. The varistor can have smaller size by virtue of the use of a series current limiting element

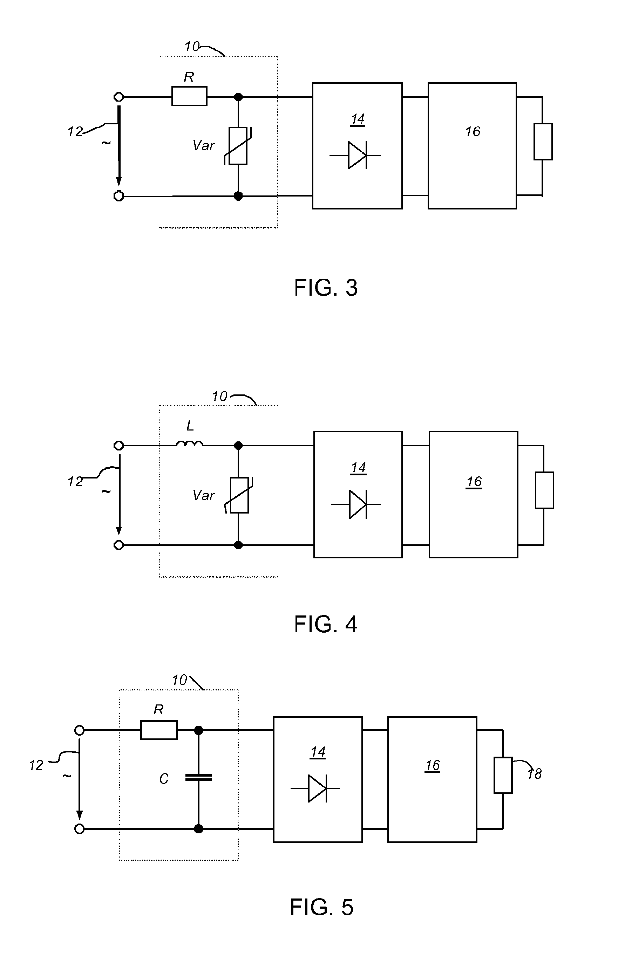

Varistors are supplied with different disc sizes. Typical values are 14, 10, 7 and 5mm. Depending on the severity level of the surge impulse used, relatively large disc sizes have to be used. Data sheets give maximum current values for 10 repetitive typical surge pulses. For example, without a significant series resistance, the use of a 10mm disc size would already be critical Embodiments of the invention (for example of Figs. 3, 6, 8 or 9 or similar arrangements) having a series resistance of only 12 Ohms already enable the use of a much cheaper varistor, for example making a 5mm disc size varistor possible. Thus, the varistor can for example have a disc shape with a 10mm disc size or less.

In another example, an inductor is used as the series impedance element and a varistor is used as parallel impedance element. Again, the varistor can have a disc shape with a 10mm disc size or less.

The power supply unit can further comprise a resistor as a second series impedance element and capacitor as a second parallel impedance element. This provides an additional low pass filter arrangement as part of the surge protection circuit.

In another example, the parallel impedance element comprises a transistor circuit for example with a bipolar transistor, MOSFET or IGBT. The transistor can then be activated only after detection of an overvoltage situation for a certain period of time. A circuit can be provided for this purpose, for detecting the overvoltage situation and for switching on the transistor in response to a detected overvoltage situation.

A diode can be connected at the output of the transistor circuit, which connects to one terminal of a capacitor which is in parallel with the load. The capacitor slows down the voltage rise in the case of a surge event so that the detection circuit can be implemented more easily.

The power stage can comprise a bridge rectifier and a power supply unit. The parallel and series impedance elements can be placed in front of the bridge rectifier and/or between the bridge rectifier and the power supply unit. Thus, the surge protection components can be separated by circuit elements of the power stage.

The power supply unit is preferably for powering a load of power less than 100W, for example an LED lighting circuit.

Examples of the invention will now be described in detail with reference to the accompanying drawings, in which:
Figure 1 shows in schematic form the elements of a first example of power supply circuit including a surge protection circuit of the invention;
Figure 2 shows in schematic form the elements of a second example of power supply circuit including a surge protection circuit of the invention;
Figure 3 shows a first detailed example of a power supply circuit in accordance with the invention;
Figure 4 shows a second detailed example of a power supply circuit in accordance with the invention;
Figure 5 shows a third detailed example of a power supply circuit in accordance with the invention;
Figure 6 shows a fourth detailed example of a power supply circuit in accordance with the invention;
Figure 7 shows a fifth detailed example of a power supply circuit in accordance with the invention;
Figure 8 shows a sixth detailed example of a power supply circuit in accordance with the invention;
Figure 9 shows a seventh detailed example of a power supply circuit in accordance with the invention used for driving LEDs;
Figure 10 shows an eighth detailed example of a power supply circuit in accordance with the invention for driving LEDs; and
Figure 11 shows a ninth detailed example of a power supply circuit in accordance with the invention for driving LEDs.

The invention provides a mains driven power supply unit for powering a load in which a surge protection stage comprises at least one (high impedance) series impedance element that limits the currents in case of a surge event to a current level below 100 amps, and more preferably below 50 amps.

The surge protection stage protects the mains driven power supply unit from a surge impulse by the application of at least one impedance element Zₛₑᵣ in series to surge impulse propagation path. There is preferably also at least one impedance element Zₚₐᵣ in parallel to the circuit to be protected.

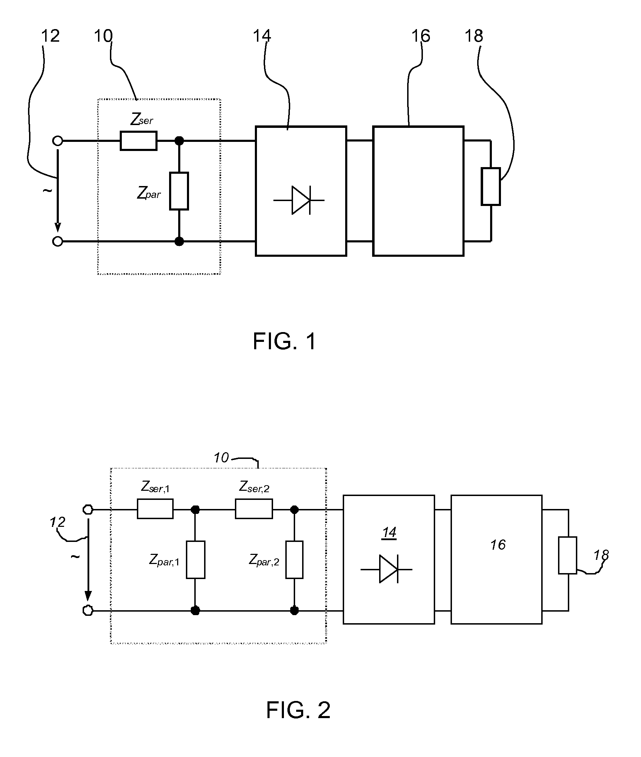

One basic configuration of protection circuit according to the invention with only one series impedance element Zₛₑᵣ and also with a parallel impedance element Zₚₐᵣ is shown in Figure 1.

The surge protection circuit 10 is placed directly after the mains input 12 of the device and is followed by the power supply system, indicated by a rectifying circuit 14 and the power supply unit 16 providing the energy to the load 18.

The series impedance element(s) are of reasonably high impedance for the high frequency surge impulse and are consequently responsible to limit the maximum currents in a surge event. The low impedance (in terms of high frequency surge impulses) parallel impedance element(s) have the task of dissipating or buffering a part of the surge energy so that the voltage seen by the actual power supply system is limited. Furthermore, the regular operation at 50Hz (for example) has to be maintained. Thus, as series impedance elements, resistors and inductors can be used, whereas the parallel impedance could be formed by a capacitor or overvoltage suppression elements such as varistors etc.

The series impedance element is distinguished over conventionally used inrush current limiters like resistors or NTC thermistors which are also placed in series to the power path. A conventional inrush current limiter used in power supplies with medium to high power ratings is placed also in series to the surge propagation path, but for efficiency reasons only low-impedance elements are used. An inrush NTC thermistor represents a low impedance element because under normal operation the resistance has dropped to a very low value as a consequence of self-heating. Thus, these inrush current limiters do not limit the surge impulses considerably so that the parallel impedance elements such as varistors and large valued capacitors have to be dimensioned adequately to protect the subsequent power supply effectively. Known power surge protection systems cannot therefore use small varistors or capacitors.

In accordance with the invention, the series impedance elements allow the usage of parallel impedance elements of smaller size, such as small capacitors and/or smaller sized varistors. This is because the series impedance element limits the current to below 100 amps, or more preferably to below 50 amps.

Since the high impedance series impedance elements (such as resistors) are in series to the path transferring the energy to the load under regular operating conditions, the invention is only applicable for applications with small to medium power ratings (less than 100W, for example a few W up to tens of W) as otherwise the power losses occurring from the real part of the series impedance would cause losses which are not tolerable.

Combinations of several series and parallel impedance elements are also feasible. Figure 2 shows in schematic form a protection circuit with two series impedance elements (Z_{ser,1} and Z_{ser,2}) and two impedance elements in parallel (Z_{par,1} and Z_{par,2}) to the circuit to be protected.

A number of examples of different circuits will now be given.

One simple implementation uses one resistor R as series protection element and one varistor Var as parallel protection element as shown in Figure 3. The combination of the varistor and the resistor clamps the voltage passed to the subsequent power supply unit to adequate levels that the power supply unit is able to handle. In order to be able to restrict the voltage across the varistor, the varistor current has to be limited to current levels corresponding to the desired voltage clamping level. Thus, an adequate series resistor is needed as series impedance element. On the other hand, the larger the series resistance is, the worse the efficiency of the power supply under normal operation.

Hence, a compromise between the efficiency and the voltage clamping level has to be found. Assuming a 220V ac powered LED lamp, driven at 30mA. This can yield 6.6W nominal LED output power. Using a 240Ω series resistance, than loss in the resistor during normal operation is 0.22W which is 3.3% of nominal LED output power which may be an acceptable amount of efficiency loss.

As already mentioned, the series resistor allows the usage of a smaller-sized varistor and thereby a cheaper varistor than used in a conventional power supply where only a low impedance inrush current limiter is applied. Depending on the maximum voltage level of the subsequent power supply unit, resistors of preferably at least 12Ω are appropriate, for example in the range from 12Ω to 510Ω. It is then be possible to use a small-sized varistor with 5 or 7 mm disc size.

Figure 4 shows an implementation in which an inductor is used instead of a resistor for better efficiency under normal operation. It has to be provided that such a protection inductor does not saturate and is able to withstand such surge impulses.

Figure 5 shows another preferred embodiment. The use of the current limiting resistor R in combination with a small capacitor allows the voltage to be limited down to reasonable levels for the subsequent power supply unit. The value of the capacitor is no longer determined by the surge but only by the application. In a preferred embodiment, this capacitor can be chosen so small that a non-electrolytic capacitance can be applied and this enables the lifetime to be increased (both elements can again placed before or after the bridge, preferably the resistor before and the capacitor after the bridge).

For example, a series resistor of 330Ω in combination with a capacitor in parallel of 1µF is for example enough, to limit a 2kV surge impulse to values lower than 700V (breakdown voltage of the transistor or driver IC).

The protection circuit with one series impedance element and one parallel impedance element is sometimes not enough. In this case, a second series impedance element and a second parallel impedance element can be used.

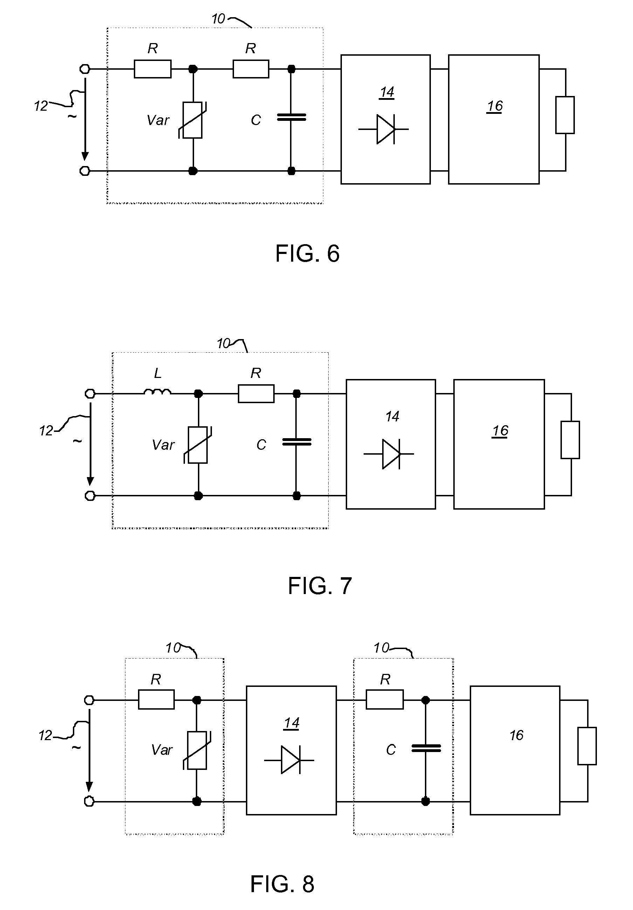

In Figure 6, a second series resistor R and small capacitor C in parallel to the circuit to be protected. is shown. The combination of the second resistor and the capacitor functions as low-pass filter, so that the high frequent surge impulse will be absorbed and the surge protection of the power supply unit can be ensured.

The capacitor is often an integral part of the power supply unit and can be used also as surge protection device.

Another similar approach is the replacement of the first resistor in Figure 6 by an inductor. The modified protection circuit is shown in Figure 7. The inductor helps to improve the efficiency in comparison to the solution with a resistor because its impedance is very low in ordinary 50Hz-operation. However, a surge impulse with its small rise time can be damped effectively because of the increasing impedance for higher frequencies.

One similar approach with four protection elements is to place the bridge rectifier 14 between the first and the second surge protection stage as shown in Figure 8. The first resistor and the varistor are placed directly after the mains input and in front of the bridge rectifier 14 whereas the second resistor and the capacitor are placed between the rectifying stage and the power supply unit. In principle the location of the series and parallel impedance elements with reference to the bridge rectifier can be chosen completely arbitrarily.

In addition to the solutions above, other alternatives with two series impedances and two parallel impedances are possible.

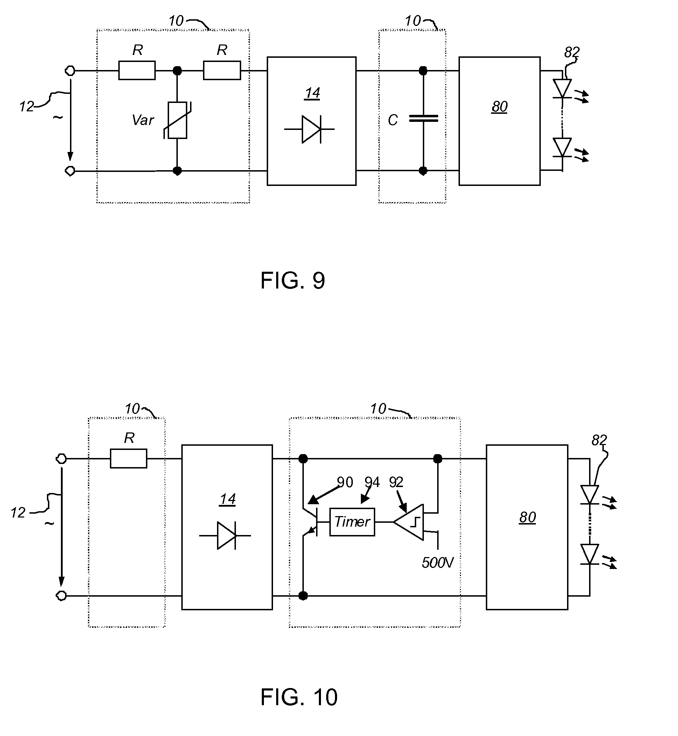

As an example of such a protected power supply system, Figure 9 shows a mains driven linear LED driver.

The power supply unit in this case comprises a linear LED driver 80, and the load is a group of LEDs 82.

The usage of a high-voltage LED driver allows input voltages of up to 700V (IC solution), so that a relatively small series resistor is able to limit the varistors clamping voltage to these voltage levels in case of a surge event. On the other hand, power losses occur in such a LED driver topology in any case, in the linear regulator. Thus, the usage of such a series resistor will not worsen the overall efficiency seriously. Thus, the surge protection is ensured by this simple protection method.

Another embodiment is an actively clamped surge protection circuit. The idea is again to use a high impedance series resistance to limit the current during a surge event. In addition, an active clamp is used to clamp the voltage across the LED driver or LED driver IC. Figure 10 shows an example circuit.

A bipolar transistor 90 as active clamp is shown, but also other types of transistors can be used, e.g. MOSFETs or IGBTs. The preferred embodiment uses a bipolar transistor because of cost. A comparator 92 detects the high-voltage surge event at a level between the maximum mains voltage (e.g. 400V) and the maximum breakdown voltage of the transistor or driver IC (e.g. 700V) - either directly or by means of a voltage divider. Upon detection, the clamp transistor 90 will be switched on for a certain time, e.g. 20µs, which clamps the voltage across transistor and LED driver. The timing aspect is controlled by a timer 94.

Afterwards it will be released such that normal operation can resume, or a surge is detected again.

Taking the example above with a 240Ω series resistance which contributes to 3.3% of nominal LED output power. The peak current clamped by the 240Ω resistor during a 2kV surge during high mains (400V) is about 10A. This peak current of 10A will flow during the surge through the active clamp transistor. The transistor will be chosen based on the current level and amount of energy that will be dissipated. For example the BUJ105 from NXP Semiconductors can be used. The active clamp transistor can be a discrete device or can be integrated in the LED driver IC, monolithically or as multi-chip module.

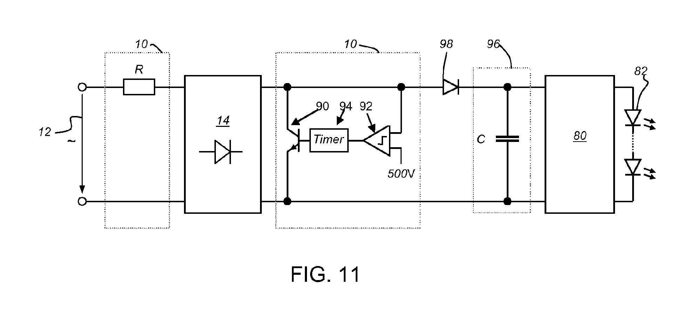

Another embodiment is an actively clamped surge protection circuit as shown in Figure 11 with an additional capacitor 96 in parallel to the circuit to be protected. This capacitor is often an integral part of the power supply unit and can be used also as a surge protection device. The size of the capacitor is still dictated by the application and not by the surge requirements. Using the active clamp in combination with such a capacitor requires the use of an additional diode 98. Otherwise, the active clamp would short circuit the capacitance after having detected the surge event. Furthermore, the use of the capacitor slows down the voltage rise in the case of a surge event so that the detection circuit can be implemented more easily.

The invention can be applied in any mains driven power supply system with low to medium power ratings. One example is the LED powered general illumination. The invention provides simple yet effective methods to protect direct-to-mains solutions from high voltage surges that enable the use of a single LED driver IC. The circuits described are only examples, and many other combinations of circuit elements are possible. For example, more than two stages are possible. Individual resistors and capacitors shown in the circuits above can in fact be implemented as combinations of serial and/or parallel components. The power supply unit can be used in an LED lighting circuit, in an LED driver circuit or more generally in a power supply unit.

The reference to mains voltages is not limited to the mains system in any particular country. It relates to ac frequencies typically of 50Hz or 60Hz, and voltages typically of 100V, 110V, 115V, 120V, 220V, 230V or 240V. However, these examples are not intended to limit the invention. It is noted that all of the examples of component values above are designed for 2kV-surge impulses (with 1.2µs/50µs voltage waves shape). Of course, different component values can be selected for different surge events. The compensation circuit preferably avoids the need for large capacitors. For example the highest capacitance component in the circuit may be 10µF.

Various other modifications will be apparent to those skilled in the art.

## Claims

1. A mains driven power supply unit for powering a load, comprising:
a power stage (14,16) for converting the ac main input voltage to the power level required by the load; and
a surge protection stage (10) comprising at least one series impedance element (Zser) that limits the currents in case of a surge event to a current level below 100 amps.

2. A power supply unit as claimed in claim 1, wherein the series impedance element (Zser) limits the currents to a current level below 50 amps.

3. A power supply unit according to claim 1 or 2, wherein a resistor (R) is used as the series impedance element.

4. A power supply unit according to claim 1 or 2, wherein an inductor (L) is used as the series impedance element.

5. A power supply unit according to any preceding claim, further comprising an additional impedance (Zpar) in parallel to the power supply input.

6. A power supply unit as claimed in claim 5, wherein the parallel impedance comprises a varistor (Var) with a relatively high impedance under normal operation and a relatively low impedance when a critical voltage has been exceeded.

7. A power supply unit according to claim 6, wherein the varistor (Var) has a disc shape with a 10mm disc size or less.

8. A power supply unit as claimed in claim 5, wherein the parallel impedance comprises a capacitor (C).

9. A power supply unit as claimed in claim 8, wherein the capacitor (C) has a capacitance of less than 10µF.

10. A power supply unit according to any one of claims 5 to 9, further comprising a resistor as a second series impedance element and a capacitor as a second parallel impedance element.

11. A power supply unit according to claim 5, wherein the parallel impedance element comprises a transistor circuit (90,92,94), wherein a transistor (90) of the transistor circuit is activated only after detection of an overvoltage situation for a certain period of time.

12. A power supply unit according to claim 11, further comprising a circuit (92) for detecting the overvoltage situation and for switching on the transistor in response to a detected overvoltage situation.

13. A power supply unit according to claim 11, further comprising a diode (98) at the output of the circuit which connects to one terminal of a capacitor (96) which is in parallel with the load.

14. A power supply unit according to any preceding claim for powering a load of power less than 100W.

15. A power supply controller, for example an LED driver circuit, comprising a power supply unit as claimed in any preceding claim.
